# DEMANDE DE BREVET EUROPEEN

(11) **EP 0 560 701 A1**
(43) Date de publication de la demande: **15.09.1993**
(21) Numéro de dépôt: 93430002.1
(22) Date de dépôt: 05.02.1993
(51) Int. Cl.: F02B 75/04, F01L 1/30, F16F 15/30

(54) **Moteur à combustion interne, avec taux de compression et masse tournante du volant moteur ajustables en marche**

(30) Priorité: 13.03.1992 FR 9203324
(71) Demandeur: MATESIC, Alex, F-83170 Brignoles (FR)
(72) Inventeur: MATESIC, Alex, F-83170 Brignoles (FR)
(74) Mandataire: Roman, Michel

(57) **Abrégé**

La présente invention a pour objet un moteur à combustion interne à hautes performances, avec taux de compression et masse tournante du volant moteur ajustables en marche.

Il est constitué par la combinaison d'un moteur (1) à explosion mono ou multi-cylindres comportant, d'abord, un arbre (2) de vilebrequin flottant porté par des paliers oscillants (4) actionnés par un arbre de commande (9) à excentriques permettant de faire varier en marche le taux de compression, ensuite, un volant moteur (3) à masse variable grâce à une ou plusieurs parties désaccouplables en fonctionnement et enfin, une commande des soupapes d'admission et d'échappement sans ressorts, desmodromique ou électromagnétique.

Il est destiné à équiper des véhicules de tous types, tels que automobiles, motocyclettes ou bateaux, ainsi que les engins de travaux publics et d'une façon générale tout dispositif utilisant un moteur à explosions à deux ou quatre temps, à essence ou à gazole, mono ou multi-cylindres, à refroidissement par eau ou par air.

## Description

La présente invention a pour objet un moteur à combustion interne à hautes performances, avec taux de compression et masse tournante du volant moteur ajustables en marche.

Il est destiné à équiper des véhicules de tous types, tels que automobiles, motocyclettes ou bateaux, ainsi que les engins de travaux publics et d'une façon générale tout dispositif utilisant un moteur à explosions à deux ou quatre temps, à essence ou à gazole, mono ou multi-cylindres, à refroidissement par eau ou par air.

Depuis son invention, par Hugon et Lenoir vers 1860 pour le cycle à deux temps, puis par Beau de Rochas, deux ans plus tard, dans le cas du cycle à quatre temps, et enfin par Diesel en 1892, le moteur à combustion interne (ou à explosion), malgré d'incessants perfectionnements, a toujours souffert, comparativement au moteur électrique par exemple, du manque de souplesse inhérent à sa conception et à son principe de fonctionnement. Cette particularité n'est pas gênante dans les applications où le régime de rotation est constant, comme les installations de pompage ou de production d'énergie électrique, mais pose des problèmes considérables dans le domaine des véhicules où ce type de moteur trouve son plus important champ d'application. Une des conséquences directes est la présence obligatoire d'une boîte de vitesses, d'un convertisseur de couple ou d'un variateur permettant de limiter la plage des régimes de rotation du moteur.

Des améliorations sensibles ont été obtenues successivement par un meilleur contrôle du mélange air-carburant grâce à des aménagements du carburateur, puis par la possibilité de faire varier l'avance à l'allumage en fonction du régime, manuellement puis automatiquement, en particulier grâce à l'allumage électronique, puis plus récemment, par l'injection directe qui permet de choisir le moment le plus propice pour introduire le carburant.

Cependant, la géométrie et par conséquent les paramètres principaux du moteur sont toujours immuables. Il est en particulier impossible d'adapter le taux de compression ou le poids des masses tournantes à la vitesse de rotation ou au style de conduite. D'autre part le système de distribution des moteurs à quatre temps, en provoquant une fermeture incomplète des soupapes à haut régime, empêche l'augmentation de la vitesse de rotation, ce qui permettrait pourtant de diminuer la taille des moteurs. Ces contraintes limitent à l'heure actuelle les possibilités d'évolution du moteur explosion, et leur suppression serait à l'origine d'améliorations très significatives de ce type de moteur.

Le brevet FR 90 10 794, du même inventeur présente un moyen de modifier le taux de compression en marche grâce à un contre-piston mobile fermant la chambre de combustion. Toutefois ce dispositif est spécifiquement destiné à un moteur de type monobloc et nécessite en tout état de cause une modification radicale de la conception du moteur lui-même.

Le dispositif selon la présente invention a pour objet la suppression des contraintes susmentionnées en rendant possible, pour un moteur de conception classique, et au prix de modifications peu importantes, la variation du taux de compression et des masses tournantes durant le fonctionnement, ainsi que l'augmentation de la vitesse de rotation maximum, ce qui permet d'obtenir un moteur nettement plus souple que les moteurs actuels, capable de s'adapter à tous les types de conduite, ainsi qu'aux différents carburants disponibles avec un rendement optimum à tous les régimes de rotation

Il est constitué par la combinaison d'un moteur à explosion mono ou multi-cylindres comportant, d'abord, un arbre de vilebrequin flottant porté par des paliers oscillants actionnés par un arbre de commande à excentriques permettant de faire varier en marche le taux de compression, ensuite, un volant moteur à masse variable grâce à une ou plusieurs parties désaccouplables en fonctionnement et enfin, une commande des soupapes d'admission et d'échappement sans ressorts, desmodromique ou électromagnétique.

Sur les dessins schématiques annexés, donnés à titre d'exemples non limitatifs de formes de réalisation de l'objet de l'invention:
la figure 1 représente, vu de dessous, carter enlevé, un bloc moteur pourvu de paliers de vilebrequin oscillants et d'un volant à masse variable,
la figure 2 est une coupe du bloc moteur suivant les flèches A-A de la figure 1, montrant un palier oscillant vu de côté ainsi que des soupapes à commande desmodromique,
La figure 3 est une vue agrandie partielle d'un palier oscillant, suivant les flèches B-B de la figure 1,
la figure 4 représente, à une échelle différente, une variante d'exécution du palier oscillant, vue selon les flèches B-B de la figure 1,
la figure 5 représente l'arbre à excentriques seul,
la figure 6 montre une variante d'exécution dans laquelle l'arbre de vilebrequin est relié à un arbre de sortie du moteur par un accouplement permettant le non alignement de ces arbres,
la figure 7 est une coupe axiale suivant les flèches C-C de la figure 6 montrant un accouplement à double cardan ou similaire,
la figure 8 est une coupe radiale suivant les flèches D-D de la figure 6 montrant un accouplement à pignon et roue à denture interne,
la figure 9 est une coupe verticale du bloc moteur passant par le plan de symétrie d'un palier oscillant et représentant une variante d'exécution dans laquelle l'arbre à excentriques est situé en partie supérieure du moteur, le palier oscillant étant commandé par une tige à rotule,
la figure 10 est une coupe axiale éclatée d'un volant moteur à masse tournante variable, avec une partie désacouplable pouvant être rendue solidaire du volant par masselottes centrifuges,
la figure 11 est une coupe axiale d'un volant moteur à masse tournante variable, avec partie désaccouplable pouvant être rendue solidaire du volant par induction,
la figure 12 est une vue de dessus de l'arbre à cames du système de commande desmodromique des soupapes,
les figures 13 et 14 représentent des coupes verticales suivant les flèches E-E de la figure 12 de deux variantes du système de commande desmodromique,
la figure 15 est une vue partielle agrandie de la figure 13 montrant la constitution d'un bloc coulissant de manoeuvre des soupapes, ainsi que les canalisations de graissage de l'arbre à cames,
la figure 16 est un détail agrandi montrant un segment unique avec ouverture à chicane destiné au bloc coulissant de manoeuvre des soupapes,
la figure 17 représente une variante d'exécution avec arbre à cames flottants,
la figure 18 montre un dispositif à aimants permanents de compensation du jeu des soupapes,
la figure 19 représente un système de distribution dans lequel les ressorts de soupapes sont remplacés par des aimants ou des électroaimants,
la figure 20 montre un système de commande des soupapes à électroaimants,
la figure 21 représente, vu de dessous, carter enlevé, un bloc moteur pourvu de paliers de vilebrequin à excentriques et d'un accouplement d'arbre de sortie à entraîneur en forme de galet ovoïde,
la figure 22 est une coupe transversale verticale suivant les flèches F-F de la figure 20,
la figure 23 est une coupe axiale partielle agrandie, suivant les flèches G-G de la figure 20 et montrant l'accouplement d'arbre de sortie
et la figure 24 représente, vus de dessus, des paliers à excentriques solidarisés. 11

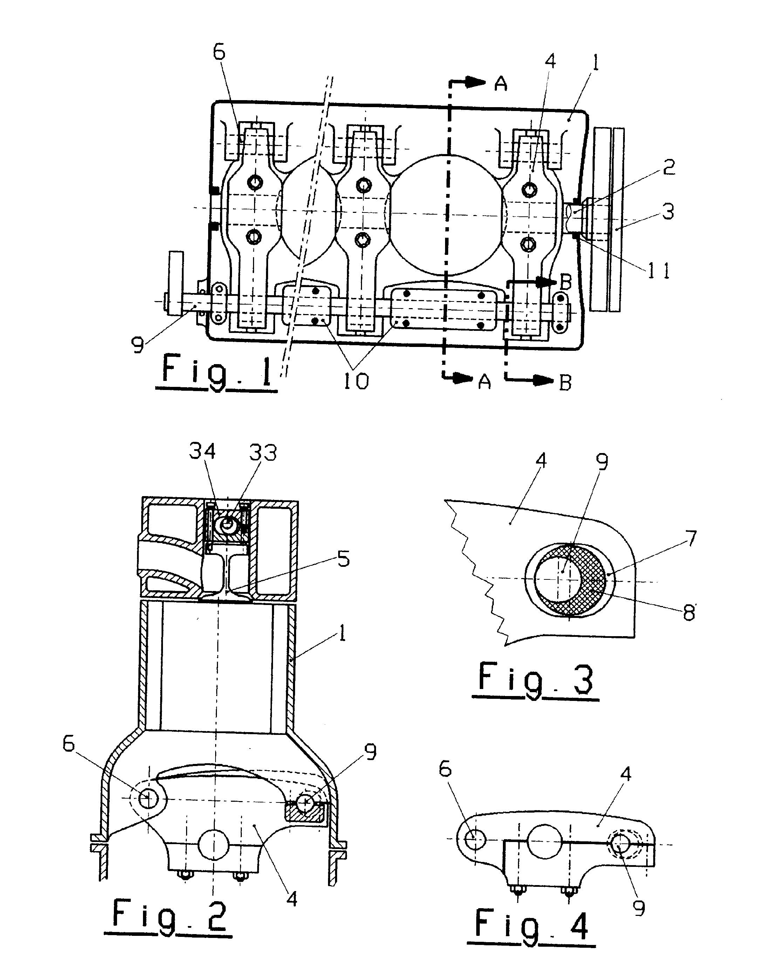

Le dispositif, figures 1 à 20, est constitué d'un bloc moteur 1 comportant un arbre de vilebrequin 2, accouplé à un volant 3 à masse tournante variable, et rendu flottant grâce à des paliers oscillants 4, ainsi que des soupapes 5 à commande desmodromique ou électromagnétique sans ressorts.

Les paliers oscillants 4, au même nombre que les paliers de vilebrequin, sont pourvus à une extrémité d'un axe de pivot 6 solidaire du bloc moteur 1 et, à l'autre extrémité d'une lumière 7 dans laquelle tournent des éléments excentriques 8 portés par un arbre de commande 9 monté sur des paliers 10 fixés sur le bloc moteur 1.

Tous les points mobiles seront montés sur coussinets et lubrifiés par pression d'huile. Du fait que les paliers de vilebrequin sont mobiles, la lubrification sera effectuée au moyen d'une canalisation interne au bloc moteur arrivant aux abords des paliers oscillants 4 par un flexible reliant une autre canalisation interne au dit palier oscillant permettant de lubrifier le palier du vilebrequin, le pivot 6 et l'élément excentrique 8.

Le montage de l'ensemble s'effectuera de la façon suivante:
- Montage des paliers oscillants 4 dans le bloc moteur 1 et mise en place des axes de pivot 6.
- Passage de l'arbre de commande 9 dans les lumières 7, puis montage sur les paliers 10.

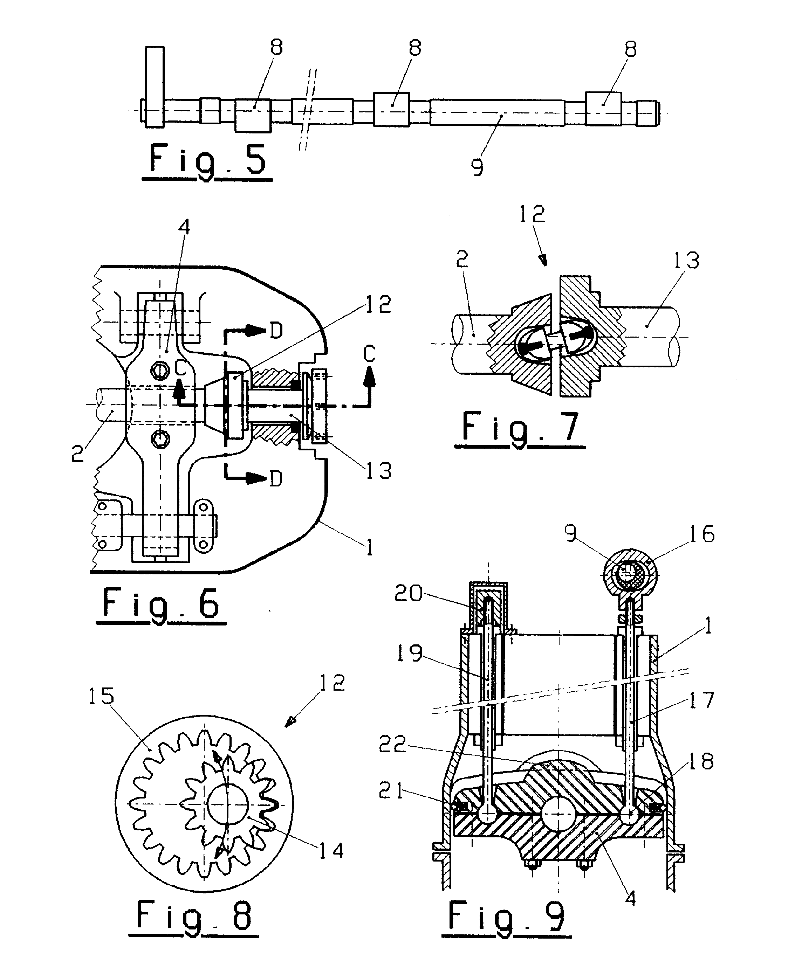

Sur la figure 4 on peut voir une variante du palier oscillant 4 dans laquelle la lumière 7 de passage de l'arbre de commande 9 est démontable, les excentriques 8 se trouvant à l'intérieur des paliers 10 qui sont pas démontables mais constitués d'un simple alésage. Dans ce cas, ledit arbre de commande est passé à travers ces alésages après montage des paliers oscillants, puis les parties démontables sont mises en place.

L'arbre de vilebreqin 2 flottant nécessite les adaptations suivantes:
- L'axe de l'arbre primaire de la boîte à vitesses devra être articulé, soit sur son propre axe, soit par une articulation finale de la transmission (cardan côté roue).
- Les deux extrémités du bloc moteur 1 devront comporter des joints à lèvres déformables 11.
- La courroie de distribution sera équipée d'un tendeur à balayage placé à l'opposé du sens de traction pour éviter qu'elle ne se détende sous l'effet des déplacements de l'arbre de vilebrequin 2.

Toutefois, pour éviter la nécessité d'une articulation de l'arbre de la boîte à vitesses et des joints déformables 11,i1 est préférable de prévoir à l'intérieur du bloc moteur 1 un accouplement 12 permettant aux axes de l'arbre de vilebrequin et de l'arbre de sortie 13 de ne pas être alignés. Cet accouplement pourra être constitué d'un double cardan ou d'un double joint à rotule (figure 7) ou de tout autre système équivalent, ou encore d'un pignon 14 solidaire de l'arbre de vilebrequin 2 entraînant une roue à denture interne 15 solidaire de l'arbre de sortie 13. Cette dernière solution présente l'avantage de provoquer une démultiplication primaire pouvant éventuellement simplifier la construction de la boîte à vitesses, ou permettant de proposer, en particulier pour des véhicules industriels, des versions à démultiplications différentes sans avoir à adapter la boite.

L'arbre de commande 9 sera actionné par un système, pouvant être constitué par exemple d'un vérin électrique ou hydraulique, asservi aux paramètres de fonctionnement du moteur et éventuellement à des choix opérés par l'utilisateur.

L'usinage du dispositif sera réalisé de la façon suivante:
- Usinage des paliers oscillants 4, montage de ceux-ci sur les axes de pivot 6.
- Passage de l'arbre de commande 9 dans les fenêtres lumières 7.
- usinage de la ligne d'arbre de vilebrequin 2.

Le tout, monté et usiné, rendra ce dispositif indi- sociable.

Dans une variante d'exécution, l'arbre de commande 9 est disposé en partie supérieure du moteur (figure 9), et les excentriques 8 tournent dans des éléments mobiles 16 fixés à l'extrémité haute de tiges verticales 17 dont l'extrémité inférieure est équipée d'une rotule 18 s'articulant dans un logement adéquat des paliers oscillants 4. De même, en particulier dans le cas d'un moteur de type monobloc, le point fixe des paliers oscillants pourra être constitué d'une tige à rotule 19 comportant éventuellement en partie haute un réglage micrométrique 20 de positionnement. Dans ce cas, les paliers oscillants seront pourvus de moyens de guidage latéraux 21 et longitudinaux 22.

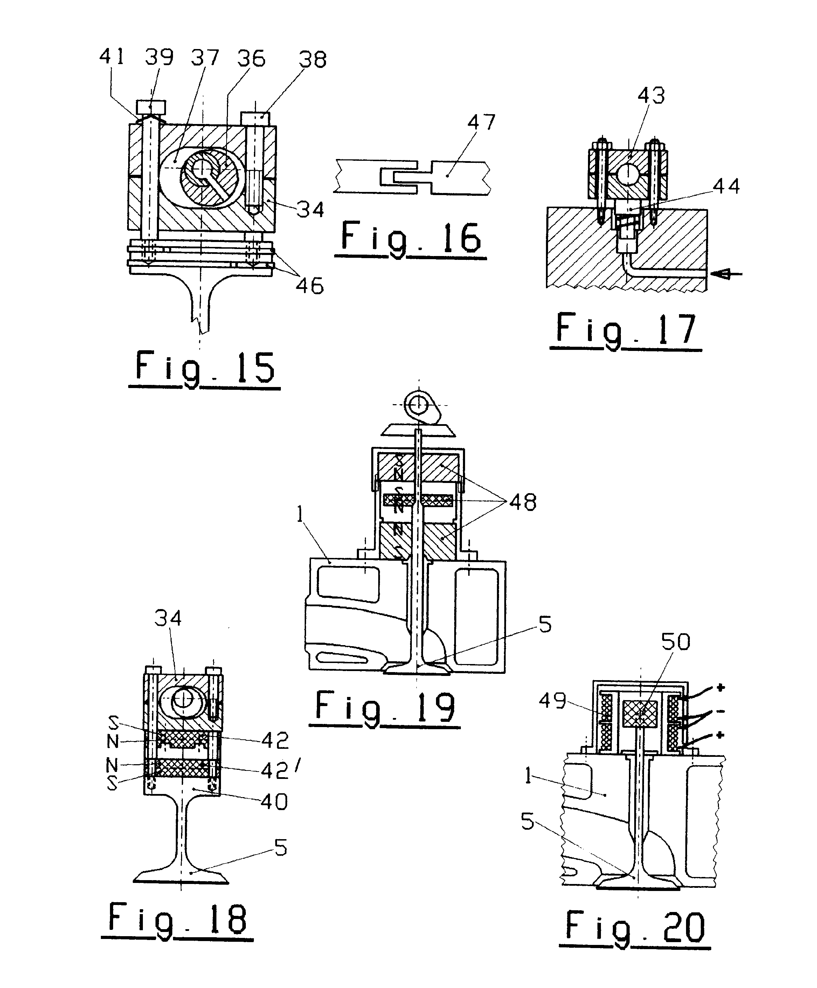

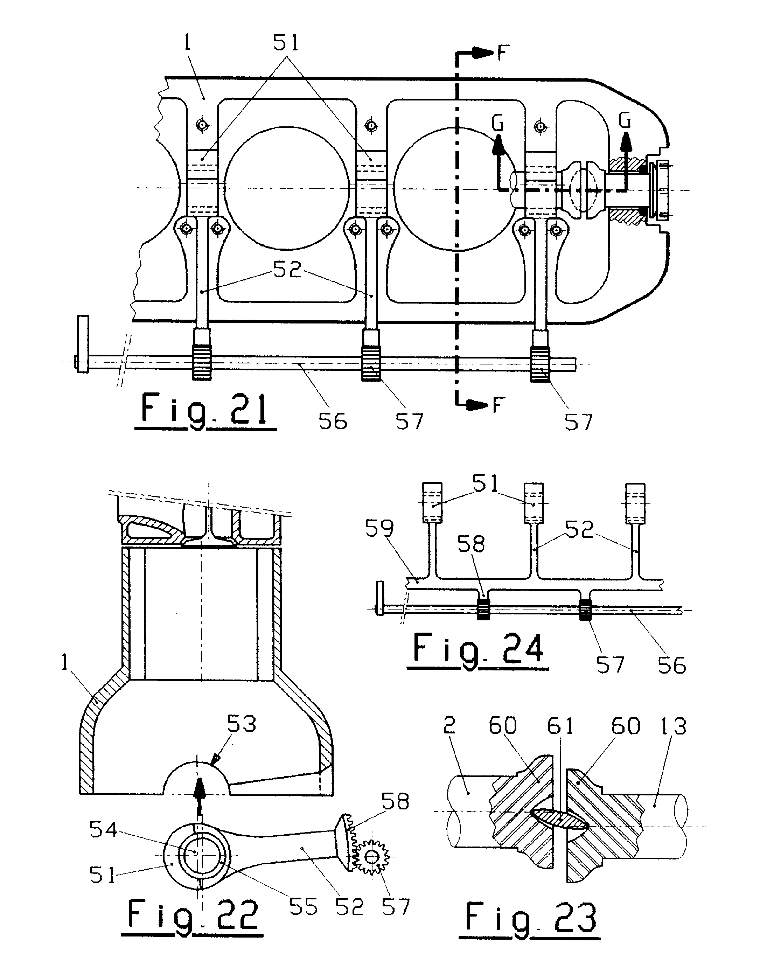

Selon une autre variante d'exécution (figures 20 et 21), les paliers de vilebrequins sont constitués d'éléments à excentrique 51 pourvus d'un bras de levier 52 permettant de leur faire opérer une rotation. Ces éléments à excentrique ont une surface extérieure cylindrique leur permettant de tourner dans le palier 53 du bloc moteur 1 associé au chapeau de palier (non représenté). Ils comportent un perçage 54 d'axe parallèle à celui du palier 53, mais décalé latéralement par rapport à celui-ci, lequel perçage reçoit le coussinet 55 dans lequel tourne le vilebrequin. L'ensemble est agencé de telle manière qu'en déplaçant verticalement l'extrémité du bras de levier 52, le vilebrequin monte ou descend, faisant ainsi varier le taux de compression.

La manoeuvre des bras de levier 52 sera effectuée par exemple au moyen d'un arbre longitudinal 56 intérieur ou extérieur au bloc moteur 1 et portant des pignons 57 actionnant des secteurs dentés 58 situés à l'extrémité desdits bras de levier.

Ces derniers pourront être solidarisés par une pièce de liaison 59. Dans ce cas, les secteurs dentés 58' seront montés sur cette barre de liaison (figure 24). Cette disposition permet également d'utiliser un secteur denté unique ayant une largeur égale à la longueur de la pièce de liaison, et actionné par un pignon de même largeur, également unique.

La commande de l'arbre longitudinal 56 et le graissage de l'élément à excentrique 51 se feront de la manière décrite plus haut pour l'arbre de commande 9, et les paliers oscillants 4.

La figure 23 montre une variante de l'accouplement 12 d'arbre de sortie formé de deux parties creuses 60 montées respectivement sur l'arbre de vilebrequin 2 et de l'arbre de sortie 13 et reliées par un entraîneur 61 constitué d'une pièce métallique en forme de galet ovoïde.

Le volant moteur 3, qui peut être monté côté boîte à vitesses ou côté distribution, est composé d'une partie entraînée en permanence 23 par l'arbre moteur 13, et d'au moins une partie désaccouplable 24 coaxiale portée par un roulement 25 monté sur un moyeu 26 solidaire de la partie entraînée en permanence.

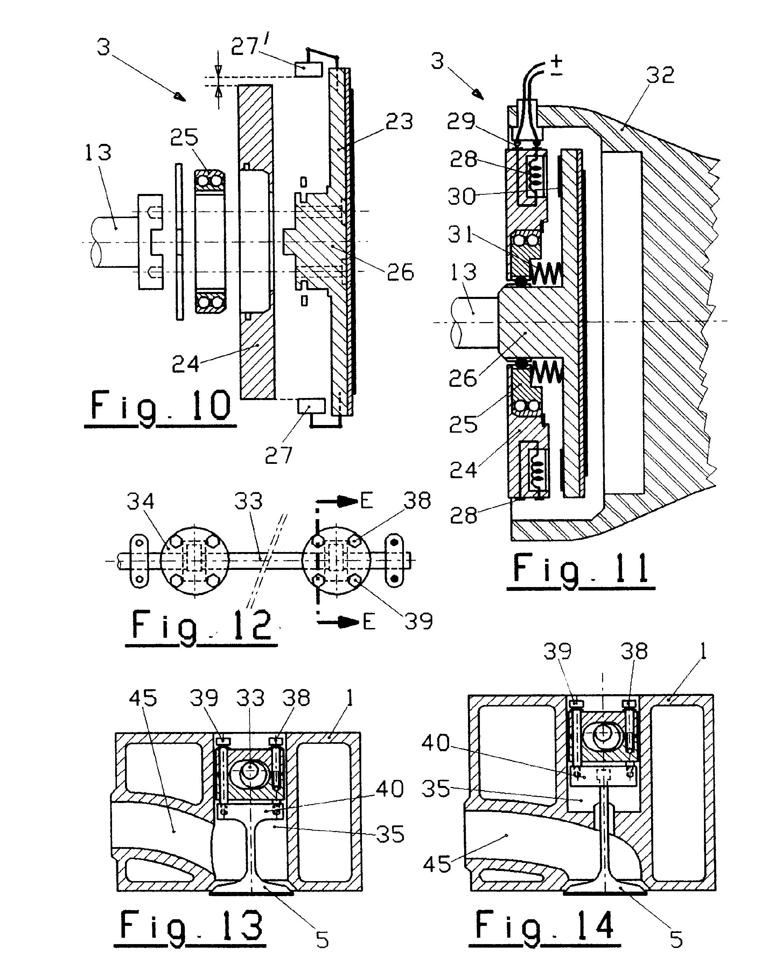

A bas régime les deux parties sont accouplées
- soit au moyen de masselottes 27, 27' appuyant sur la périphérie de la partie désaccouplable (figure 10), la force centrifuge provoquant à un moment bien déterminé l'écartement des masselottes et la séparation des deux masses tournantes de manière à avoir un maximum d'inertie à bas régime et un minimum à haut régime,
- soit grâce à des électroaimants 28 alimentés par des contacts frottants 29 périphériques montés à l'intérieur de la cloche d'embrayage 32, et appliquant la partie désaccouplable contre des éléments à haut coefficient de frottement 30 portés par la partie entraînée en permanence 23 (figure 11). Dans ce cas, la partie désaccouplable coulisse axialement sur le moyeu 26 et est écartée de la partie entraînée en permanence par un ressort 31 lorsque les électroaimants 28 ne sont pas sous tension. L'alimentation de ces derniers est contrôlée par un dispositif sensible à la vitesse de rotation et/ou à d'autre paramètres tels que l'accélération, ou le taux de compression défini par la position des paliers oscillants 4.

Afin d'éviter l'affolement des soupapes et de permettre des vitesses de rotation élevées, le système de distribution est totalement dépourvu de ressorts.

Dans un premier mode de réalisation, l'arbre à cames 33, simple ou double, traverse des blocs coulissants 34 solidaires des soupapes 5 et se déplaçant verticalement dans des puits cylindriques 35 usinés en partie haute du bloc moteur 1.

Les cames 36 tournent dans une cavité ovalisée 37 ménagée à l'intérieur desdits blocs coulissants de manière de réaliser un entraînement desmodromique des soupapes permettant de supprimer les ressorts. Afin de permettre leur montage, les blocs coulissants 34 sont en deux parties séparées par un plan horizontal passant par la cavité ovalisée 37 et assemblés par deux boulons 38 diamétralement opposés. Deux boulons traversants 39, également diamétralement opposés, sont vissés dans une pièce 40 solidaire de la queue de la soupape 5, leur longueur étant déterminée pour permettre un certain jeu axial compensé par des rondelles élastiques 41 montées sous les têtes desdits boulons traversants.

Le jeu axial peut également être compensé par un ensemble d'aimants permanents 42, 42' (figure 18), ou être obtenu grâce à un arbre à cames flottant porté par des paliers coulissants 43 montés sur des éléments élastiques ou des pistons pneumatiques 44 (figure 17).

Le puits cylindrique 35 peut être fermé en partie basse, le fond portant alors un guide de queue de souppape assurant l'étanchéité (figure 13). Il peut aussi déboucher directement dans le conduit 45 d'admission ou d'échappement (figure 14). Dans ce cas, la pièce 40 solidaire de la queue de soupape est équipée de segments multiples 46. Ces derniers peuvent être remplacés par un segment unique 47 comportant une fermeture formant chicane (figure 16).

Dans un deuxième mode de réalisation, les ressorts de soupapes sont remplacés par des aimants 48 ou des électroaimants, ou encore par des aimants permanents combinés avec des électroaimants renforçant leur effet (figure 19), l'arbre à cames étant de type classique ou à excentriques.

Dans un troisième mode de réalisation, les soupapes 5 sont commandées directement au moyen d'un électroaimant 49 à double enroulement, agissant sur un noyau 50 solidaire de la queue de la soupape, aussi bien à l'ouverture qu'à la fermeture par, alimentation de l'un ou de l'autre enroulement (figure 20).

La position des paliers oscillants 4 du vilebrequin, ou des éléments à excentriques 51, fixant le taux de compression, ainsi que la mise sous tension des électroaimants 28 de la partie désaccouplable 24 du volant moteur 3 et la commande électromagnétique 49 des soupapes peuvent avantageusement être pilotées par un ordinateur en fonction des paramètres de fonctionnement du moteur mesurés par une série de capteurs, et de choix effectués par le conducteur en fonction du style de conduite pratiqué, à l'aide de touches du tableau de bord par exemple.

Le positionnement des divers éléments constitutifs donne à l'objet de l'invention un maximum d'effets utiles qui n'avaient pas été, à ce jour, obtenus par des dispositifs similaires.

## Revendications

1°. Moteur à combustion interne à hautes performances, avec taux de compression et masse tournante du volant moteur ajustables en marche, pouvant équiper des véhicules de tous types, des engins de travaux publics et d'une façon générale tout dispositif utilisant un moteur à explosions à deux ou quatre temps, à essence ou à gazole, mono ou multi-cylindres, à refroidissement par eau ou par air,
caractérisé par la combinaison d'un moteur à explosion mono ou multi-cylindres comportant, d'abord, un arbre de vilebrequin (2) flottant porté par des paliers oscillants (4), ou des éléments rotatifs à excentriques (51) tournant dans le palier (53) du bloc moteur (1), permettant de faire varier en marche le taux de compression en faisant monter ou descendre le vilebrequin, ledit arbre de vilebrequin entraînant l'arbre de sortie (13) par l'intermédiaire d'un accouplement (12) inséré à l'intérieur du bloc moteur (1) et constitué d'un double cardan ou d'un double joint à rotule ou de tout autre système permettant aux axes des deux arbres de ne pas être alignés, ensuite, un volant moteur (3), situé côté boîte à vitesses ou côté distribution, à masse variable en fonctionnement composé d'une partie entraînée en permanence (23) par l'arbre moteur (13), et d'au moins une partie désaccouplable (24) coaxiale portée par un roulement (25) monté sur un moyeu (26) solidaire de ladite partie entraînée en permanence, les deux parties étant accouplées à bas régime et enfin, une commande des soupapes (5) d'admission et d'échappement sans ressorts.

2°. Dispositif selon la revendication 1, se caractérisant par le fait que les paliers oscillants (4) sont pourvus à une extrémité d'un axe de pivot (6) solidaire du bloc moteur (1) et, à l'autre extrémité d'une lumière (7) dans laquelle tournent des éléments excentriques (8) portés par un arbre de commande (9) monté sur des paliers (10) fixés sur ledit bloc moteur.

3°. Dispositif selon la revendication 1, se caractérisant par le fait que les paliers oscillants (4) sont pourvus à une extrémité d'un axe de pivot (6) solidaire du bloc moteur (1) et, à l'autre extrémité d'une lumière (7) démontable, les excentriques (8) se trouvant à l'intérieur de paliers (10) non démontables étant constitués d'un simple alésage, l'arbre de commande (9) étant passé à travers ces alésages après montage des paliers oscillants (4), puis les parties démontables mises en place.

4°. Dispositif selon la revendication 1, se caractérisant par le fait que l'arbre de commande (9) des paliers oscillants (4) est disposé en partie supérieure du moteur, et que les excentriques (8) tournent dans des éléments mobiles (16) fixés à l'extrémité haute de tiges verticales (17), passant par exemple à l'intérieur de tirants creux d'assemblage du bloc moteur (1), et dont l'extrémité inférieure est équipée d'une rotule (18) s'articulant dans un logement adéquat des paliers oscillants (4) pourvus de moyens de guidage latéraux (21) et longitudinaux (22), le point fixe desdits paliers oscillants étant constitué d'une tige à rotule (19) pouvant comporter en partie haute un réglage micrométrique (20) de positionnement.

5°. Dispositif selon la revendication 1, se caractérisant par le fait que les éléments rotatifs à excentrique (51) sont pourvus d'un bras de levier (52) permettant de leur faire opérer une rotation grâce à un secteur denté (58) monté à l'extrémité desdits bras de levier et actionné par des pignons (57) portés par un arbre longitudinal (56) intérieur ou extérieur au bloc moteur (1), lesdits éléments rotatifs comportant un perçage (54) d'axe parallèle à celui du palier (53), mais décalé latéralement par rapport à celui-ci, lequel perçage reçoit le coussinet (55) dans lequel tourne le vilebrequin.

6°. Dispositif selon la revendication 5, se caractérisant par le fait que les bras de levier (52) sont manoeuvrés au moyen d'un arbre longitudinal (56) intérieur ou extérieur au bloc moteur (1) et portant des pignons (57) actionnant des secteurs dentés (58) situés à l'extrémité desdits bras de levier.

7°. Dispositif selon la revendication 5, se caractérisant par le fait que les bras de levier (52) sont solidarisés par une pièce de liaison (59), un ou des secteurs dentés (58') étant montés sur cette barre de liaison et actionnés par un ou des pignons (57) portés par un arbre longitudinal (56) intérieur ou extérieur au bloc moteur (1), le secteur denté pouvant être unique et avoir une largeur égale à la longueur de la pièce de liaison, et être actionné par un pignon de même largeur, également unique.

8°. Dispositif selon la revendication 1, se caractérisant par le fait que l'accouplement (12) inséré à l'intérieur du bloc moteur (1) entre l'arbre de vilebrequin (2) et l'arbre de sortie (13) est constitué d'un pignon (14) solidaire de l'arbre de vilebrequin entrai- nant une roue à denture interne (15) solidaire de l'arbre de sortie, l'ensemble provoquant une démultiplication primaire.

9°. Dispositif selon la revendication 1, se caractérisant par le fait que la ou les parties désaccouplables (24) du volant moteur (3) sont rendues solidaires de celui-ci à bas régime au moyen de masselottes (27, 27') appuyant sur la périphérie de la ou des parties désacouplables, la force centrifuge provoquant à un moment bien déterminé l'écartement des masselottes et la séparation des deux masses tournantes de manière à avoir un maximum d'inertie à bas régime et un minimum à haut régime.

10°. Dispositif selon la revendication 1, se caractérisant par le fait que la ou les parties désaccouplables (24) du volant moteur (3) sont rendues solidaires de celui-ci à bas régime grâce à des électroaimants (28) alimentés par des contacts frottants (29) périphériques montés à l'intérieur de la cloche d'embrayage (32), et appliquant la partie désaccouplable contre des éléments à haut coefficient de frottement (30) portés par la partie entraînée en permanence (23), la ou les parties désaccouplables (24) coulissant axialement sur le moyeu (26) et étant écartée de la partie entraînée en permanence par un ressort (31) lorsque les électroaimants (28) ne sont pas sous tension, l'alimentation de ces derniers étant contrôlée par un dispositif sensible à la vitesse de rotation et/ou à d'autre paramètres tels que l'accélération, ou le taux de compression défini par la position des paliers oscillants (4).

11 °. Dispositif selon la revendication 1, se caractérisant par le fait que l'arbre à cames (33), simple ou double, du moteur traverse des blocs coulissants (34) solidaires des soupapes (5) et se déplaçant verticalement dans des puits cylindriques (35) usinés en partie haute du bloc moteur (1), les cames (36) tournant dans une cavité ovalisée (37) ménagée à l'intérieur desdits blocs coulissants de manière à réaliser un entraînement desmodromique des soupapes permettant de supprimer les ressorts, ces blocs coulissants étant en deux parties séparées par un plan horizontal passant par la cavité ovalisée (37), des boulons traversants (39), vissés dans une pièce (40) solidaire de la queue de la soupape (5) ayant une longueur déterminée pour permettre un certain jeu axial.

12°. Dispositif selon la revendication 11, se caractérisant par le fait que le jeu axial est compensé par des rondelles élastiques (41) montées sous la tête des boulons traversants (39).

13°. Dispositif selon la revendication 11, se caractérisant par le fait que le jeu axial est compensé par un ensemble d'aimants permanents (42, 42').

14°. Dispositif selon la revendication 11, se caractérisant par le fait que le jeu axial est compensé grâce à un arbre à cames flottant porté par des paliers coulissants (43) montés sur des éléments élastiques ou des pistons pneumatiques (44).

15°. Dispositif selon la revendication 1, se caractérisant par le fait que les ressorts de soupapes sont remplacés par des aimants et/ou des électroaimants (48).

16°. Dispositif selon la revendication 1, se caractérisant par le fait que les soupapes (5) sont commandées directement au moyen d'un électroaimant (49) à double enroulement agissant sur un noyau (50) solidaire de la queue de la soupape, aussi bien à l'ouverture qu'à la fermeture, par alimentation de l'un ou de l'autre enroulement.

17°. Dispositif selon l'une quelconque des revendications 1 à 8, 10 et 16 se caractérisant par le fait que la position des paliers oscillants (4) de vilebrequin ou des éléments rotatifs à excentrique (51) fixant le taux de compression, ainsi que la mise sous tension des électroaimants (28) de la ou des parties désaccouplables (24) du volant moteur (3) et la commande électromagnétique (49) des soupapes sont pilotées par un ordinateur en fonction des paramètres de fonctionnement du moteur mesurés par une série de capteurs, et de choix effectués par le conducteur en fonction du style de conduite pratiqué, à l'aide de touches du tableau de bord par exemple.
